# EUROPEAN PATENT APPLICATION

(11) **EP 4 521 369 A1**
(43) Date of publication of application: **12.03.2025**
(21) Application number: 24185011.4
(22) Date of filing: 27.06.2024
(51) Int. Cl.: G07C 5/08, B60W 50/04, G06N 20/00, G07C 5/00

(54) **AUTONOMOUS DRIVING SYSTEM**

(30) Priority: 05.09.2023 JP 2023143465
(71) Applicant: TOYOTA JIDOSHA KABUSHIKI KAISHA, Aichi-ken, 471-8571 (JP)
(72) Inventor: OHSUGI, Masamichi, Tokyo, 103-0022 (JP)
(74) Representative: J A Kemp LLP

(57) **Abstract**

The autonomous driving system includes an external sensor, an internal sensor configured to detect a traveling state of the vehicle, a machine learning model configured to receive a detection results of the external sensor and the internal sensor as input values and outputs an instruction value of autonomous driving, an operation unit configured to perform the autonomous driving of the vehicle based on the instruction value output, a transmission unit configured to transmit information to a device outside the vehicle, and a control unit, wherein the control unit extracts the input value and the instruction value in response to receiving the user operation related to the information transmission via the user interface, and causes the transmission unit to transmit the extracted input value and the extracted instruction value of the machine learning model to the device outside the vehicle.

## Description

### CROSS-REFERENCE TO RELATED APPLICATION

This application is based on Japanese Patent Application No. 2023-143465 filed with Japan Patent Office on September 5, 2023, the entire contents of which are hereby incorporated by reference.

### TECHNICAL FIELD

The present disclosure relates to an autonomous driving sy stem.

### BACKGROUND

International Publication No. WO2019/116423 discloses a device that collects teacher data for machine learning for autonomous driving. This apparatus includes a sensor that acquires external environment information and a control unit that assigns a label to information of interest included in the acquired external environment information. In a case where the vehicle can pass without performing the avoidance operation at a time point when the external environment information is collected, the control unit assigns a label indicating that the vehicle can pass to the information of interest. When the avoidance operation is performed, the control unit assigns a label indicating non-passable to the information of interest. As a result, at least a part of labeling (annotation work) for the external environment information is automated, and reduction in effort, reduction in time, and reduction in cost of teacher data generation work are realized.

### SUMMARY

The trained model generated by machine learning (hereinafter, referred to as the "machine learning model") may not always achieve appropriate vehicle control in all situations. Therefore, in order to appropriately operate the autonomous driving control by the machine learning model, a configuration for monitoring the autonomous driving control is indispensable. The present disclosure provides a technique capable of notifying information on an autonomous driving by a machine learning model at an appropriate timing.

An autonomous driving system according to an aspect of the present disclosure includes an external sensor, an internal sensor, a machine learning model, an operation unit, a user interface, a transmission unit, and a control unit. The external sensor detects an external environment of the vehicle. The internal sensor detects a traveling state of the vehicle. The machine learning model receives the detection result of the external sensor and the detection result of the internal sensor as input values, and outputs an instruction value of the autonomous driving. The operation unit performs the autonomous driving of the vehicle based on the instruction value output by the machine learning model. The user interface receives a user operation related to information transmission from an occupant of the vehicle. The transmission unit transmits the information to a device outside the vehicle. The controller is connected to the user interface and the transmission unit. The control unit extracts an input value and an instruction value of the machine learning model in response to receiving the user operation related to information transmission via the user interface, and causes the transmission unit to transmit the extracted input value and instruction value of the machine learning model to the device outside the vehicle.

In the autonomous driving system, in response to receiving the user operation related to information transmission, an input value and an instruction value of a machine learning model are extracted, and the extracted input value and instruction value of the machine learning model are transmitted to a device outside the vehicle. In this way, a user (for example, an occupant in the vehicle) can determine a risk candidate scene by himself/herself and notify the device outside the vehicle of input/output data corresponding to the scene. Therefore, the autonomous driving system can notify the information of the autonomous driving by the machine learning model at an appropriate timing.

In one embodiment, the control unit may manage authority of the occupant related to the information transmission, and extract the input value and the instruction value of the machine learning model according to the user operation of the occupant to which the authority is given. Accordingly, the notification is avoided in response to the user operation of the occupant who is not given the authority.

In one embodiment, the control unit may acquire a voice of the occupant via the user interface, and determine a time range of data for extracting the input value and the instruction value of the machine learning model based on a voice recognition result. Thus, the amount of data to be transmitted is reduced.

In one embodiment, the control unit may extract data going back a predetermined time from a timing at which the user operation related to the information transmission is received via the user interface. As a result, the autonomous driving system can reliably transmit data that is a predetermined time before the timing at which the user operation is received.

According to the present disclosure, it is possible to notify information on an autonomous driving by a machine learning model at an appropriate timing.

### BRIEF DESCRIPTION OF DRAWINGS

FIG. 1 is a block diagram illustrating an example of a configuration of vehicle provided with an autonomous driving system according to an embodiment.
FIG. 2 is a flowchart illustrating an example of an operation of the autonomous driving system according to the embodiment.

### DETAILED DESCRIPTION

Hereinafter, embodiments of the present invention will be described with reference to the drawings. In the description of the drawings, the same element is denoted by the same symbol, and redundant description is repeated.

### [Configuration of Vehicle]

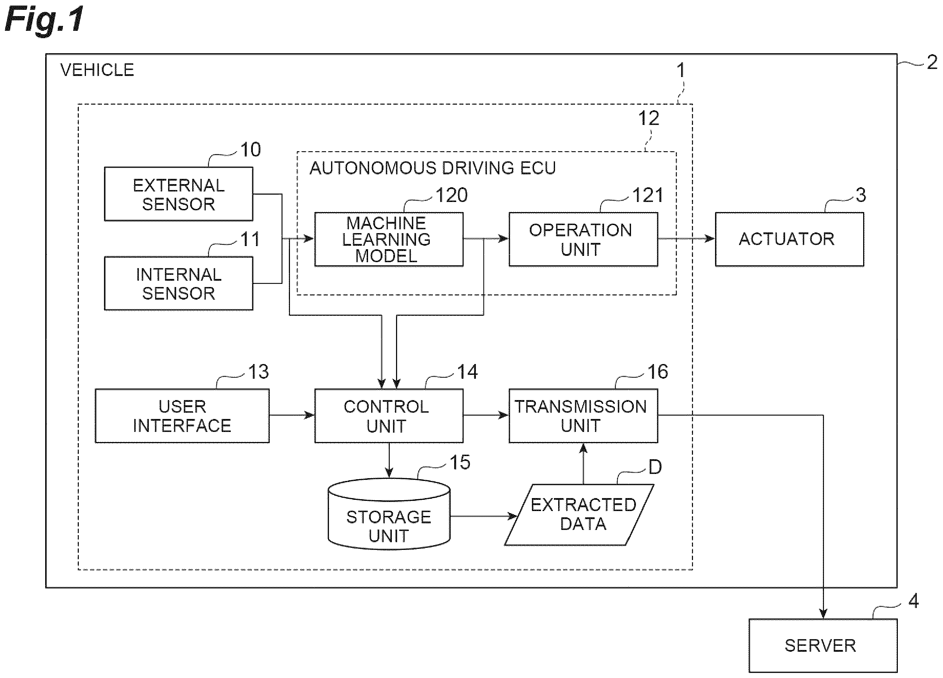

FIG. 1 is a block diagram illustrating an example of a configuration of vehicle provided with an autonomous driving system according to an embodiment. As illustrated in FIG. 1, an autonomous driving system 1 is mounted in a vehicle 2, for example, and causes the vehicle 2 to function as an autonomous driving vehicle. The autonomous driving system 1 realizes autonomous driving by operating an actuator 3 of the vehicles 2. The actuator 3 includes, for example, an engine actuator, a brake actuator, and a steering actuator.

The autonomous driving system 1 includes an external sensor 10, an internal sensor 11, an autonomous driving ECU 12, a user interface 13, a control unit 14, a storage unit 15, and a transmission unit 16.

The external sensor 10 is an in-vehicle sensor that detects an external environment of the vehicle 2. The external sensor 10 includes at least one of a camera and a radar sensor. The external sensor 10 outputs detection information regarding an image and a surrounding object to the autonomous driving ECU 12.

The internal sensor 11 is an in-vehicle sensor that detects a traveling state of the vehicle 2. The internal sensor 11 includes, for example, a vehicle speed sensor, an accelerator sensor, and a yaw rate sensor. The internal sensor 11 outputs detection information regarding the traveling state of the vehicle 2 to the autonomous driving ECU 12.

The autonomous driving ECU 12 includes a machine learning model 120 and an operation unit 121. The ECU (Electronic Control Unit) is an electronic control unit including a CPU (Central Processing Unit), a ROM (Read Only Memory), a RAM (Random Access Memory), a CAN (Controller Area Network) communication circuit, and the like. The autonomous driving ECU 12 realizes autonomous driving by an artificial intelligence (AI) system by using the machine learning model 120.

The machine learning model 120 receives the detection result of the external sensor 10 and the detection result of the internal sensor 11 as input values and outputs an instruction value of the autonomous driving in the vehicle 2. The machine learning model 120 is, for example, a recursive deep learning model. For example, the machine learning model 120 performs learning on the basis of teacher data including an input value and an instruction value of autonomous driving, and is distributed to the vehicles 2. The instruction value of the autonomous driving is a control value of the actuators 3. The operation unit 121 operates the actuator 3 based on the instruction value output by the machine learning model 120, and autonomously drives the vehicle 2.

The user interface 13 receives a user operation related to information transmission from an occupant (also referred to as a user) of the vehicle 2. The user interface 13 is a switch or a button, and includes an icon displayed on the display. The user operation related to information transmission is an operation by the occupant related to an upload instruction described later. The operation of the occupant related to the upload instruction is, for example, a switch operation or a button operation for permitting the upload. The occupant can operate the user interface 13 in a scene (risk candidate scene) in which the occupant feels that there is a risk. The user interface 13 may include a microphone. That is, the user operation includes an instruction by voice.

The control unit 14 controls an operation of uploading data to the server 4, which is an example of a device outside the vehicle. The control unit 14 includes, for example, an ECU. The control unit 14 acquires an input value and an instruction value of the machine learning model 120 and stores them in the storage unit 15. The storage unit 15 is a storage device such as a hard disk drive (HDD). The storage unit 15 stores an input value and an instruction value of the machine learning model 120 in a predetermined period.

The control unit 14 is connected to the user interface 13 and the transmission unit 16. In response to receiving a user operation related to information transmission via the user interface 13, the control unit 14 extracts an input value and an instruction value of the machine learning model 120. The control unit 14 refers to the storage unit 15, extracts an input value and an instruction value of the machine learning model 120 that match the condition, and sets the input value and the instruction value as extracted data D.

The control unit 14 may extract data going back by a predetermined time from a timing at which a user operation related to information transmission is received via the user interface 13. For example, the control unit 14 extracts past data within a predetermined time from the button press. The control unit 14 may extract a specific scene matching a predetermined condition from the past data. For example, the control unit 14 extracts a scene of a risk candidate that occurred at a time close to the time when the button was pressed. The scene of the risk candidate is, for example, driver intervention (accelerator, brake, or the like), acceleration or deceleration, a steering angle equal to or greater than a threshold value, a distance between the vehicle 2 and a surrounding vehicle equal to or less than a threshold value, a distance between the vehicle 2 and a surrounding lane marking equal to or less than a threshold value, sounding of a horn, or a behavior surprised by the driver.

The control unit 14 may set the scene in which the lane departure risk occurs and the scene in which the collision risk between the vehicle 2 and the other object occurs as the specific scene. For example, the control unit 14 uses the lane position with respect to the vehicle 2, the position of the surrounding traffic participant, and the recognition result of the surrounding structure in each time going back from the time of pressing the button, and sets the first scene in which the lane boundary line is equal to or less than the threshold value or the minimum from the center of the vehicle 2 as the scene in which the lane departure risk occurs. The control unit 14 sets the first scene in which the distance between the predicted positions of the vehicle 2 and the other traffic participant at each time is equal to or less than the threshold value or is the minimum as the scene in which the collision risk with the other object occurs. By adopting the smallest value, the control unit 14 can specify the data range without depending on the difference felt to be risky for each user, which is difficult to set in advance. The control unit 14 may adopt a value looser than that at the time of automatic log collection as the threshold value. As a result, the control unit 14 can extract data without fail. In addition, the control unit 14 may set the thresholds by using a lower limit value estimated from a notification data from the user or a collection log.

The control unit 14 may acquire the voice of the occupant via the user interface 13 and determine the time range of the data for extracting the input value and the instruction value of the machine learning model 120 based on the voice recognition result. For example, the control unit 14 may recognize the utterance of the occupant such as "The response to the cutting-in vehicle is slow and dangerous" or "The reason is not found, but the host vehicle travels toward the right of the lane" and may specify the data corresponding to the utterance. For example, the control unit 14 determines that "vehicles traveling in other lanes enter the own lane" at the closest time in the data traced back from the time at which the utterance is made based on the utterance "The response to the cutting-in vehicle is slow and dangerous". The scene may be specified, and the data from the time at which the vehicle starts the behavior of starting to approach the own lane to the time at which the indication is made may be autonomously specified. Alternatively, the control unit 14 may determine that "the host vehicle is approaching the right side of the lane" at the closest time in the data traced back from the time at which the utterance is made based on the utterance "The reason is not found, but the host vehicle travels toward the right of the lane". The scene may be specified, and the data from the time at which the vehicle 2 traveled in the center of the lane before starting the behavior to the time at which the indication was made may be autonomously specified.

The control unit 14 may manage the authority of the occupant related to the information transmission, and extract the input value and the instruction value of the machine learning model 120 according to the user operation of the occupant to which the authority is given. For example, the control unit 14 determines the authority of the occupant specified by the in-vehicle camera, the biological information (including fingerprint authentication), the seat position, and the like with reference to a list of occupants having permission authority stored in the storage device of the ECU or the like. Thus, it is possible to contribute to prevention of child's mischief.

The control unit 14 causes the transmission unit 16 to transmit the extracted data D to the server 4. The transmission unit 16 is a communication device capable of wireless communication. Thus, only the extracted data is uploaded. The uploaded information may be used for early risk discovery and response.

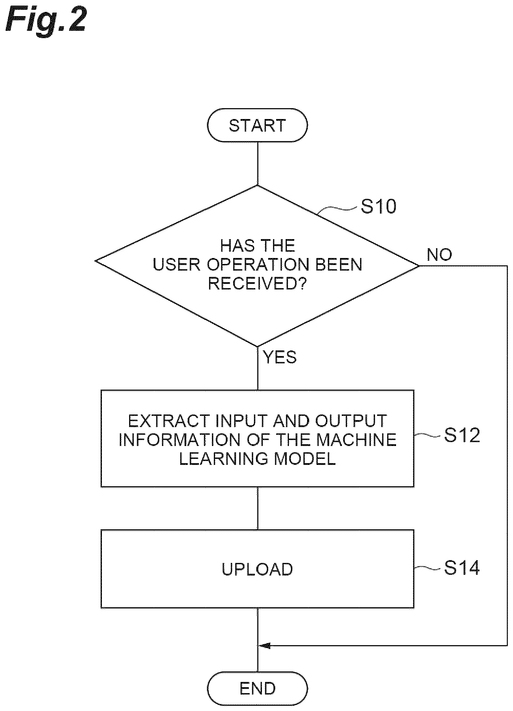

Next, the operation of the autonomous driving system 1 will be described. FIG. 2 is a flowchart illustrating an example of an operation of the autonomous driving system according to the embodiment. The flowchart shown in FIG. 2 is started when the autonomous driving system 1 receives a start instruction operation during autonomous driving by the autonomous driving system 1.

As shown in FIG. 2, first, the control unit 14 of the autonomous driving system 1 determines whether or not a user operation has been received as step S10. When it is determined that the user operation has been received (Step S10: YES), the control unit 14 extracts input and output information of the machine learning model 120 as Step S12. Thus, the extraction data D is generated. Then, the control unit 14 causes the transmission unit 16 to upload the extracted data D as step S14. When step S14 is completed, and when it is determined that a user operation has not been received (step S10: NO), the flowchart shown in FIG. 2 ends. By executing the flowchart illustrated in FIG. 2, the information related to the scene of the risk candidate of the autonomous driving by the machine learning model 120 can be appropriately uploaded.

### [Summary of Embodiment]

According to the autonomous driving system 1, the input value and the instruction value of the machine learning model 120 are extracted in response to the reception of the user operation related to the information transmission, and the extracted input value and instruction value of the machine learning model 120 are transmitted to the server 4. In this way, the users can determine the risk candidate scene by themselves and notify the server 4 of the input/output data corresponding to the scene. Therefore, the autonomous driving system 1 can notify the information of the autonomous driving by the machine learning model 120 at an appropriate timing.

While exemplary embodiments have been described above, various omissions, substitutions, and changes may be made without being limited to the exemplary embodiments described above.

## Claims

1. An autonomous driving system (1) comprising:
an external sensor (10) configured to detect an external environment of a vehicle (2);
an internal sensor (11) configured to detect a traveling state of the vehicle (2);
a machine learning model (120) configured to receive a detection result of the external sensor (10) and the detection result of the internal sensor (11) as input values and output an instruction value of autonomous driving; and
an operation unit (121) configured to perform the autonomous driving of the vehicle (2) based on the instruction value output by the machine learning model (120);
a user interface (13) configured to receive a user operation related to information transmission from an occupant of the vehicle (2);
a transmission unit (16) configured to transmit information to a device outside the vehicle (2); and
a control unit (14) connected to the user interface (13) and the transmission unit (16),
wherein the control unit (14) extracts the input value and the instruction value of the machine learning model (120) in response to receiving the user operation related to the information transmission via the user interface (13), and causes the transmission unit (16) to transmit the extracted input value and the extracted instruction value of the machine learning model (120) to the device outside the vehicle (2).

2. The autonomous driving system (1) according to claim 1, wherein the control unit (14) manages authority of the occupant related to the information transmission, and extracts the input value and the instruction value of the machine learning model (120) according to the user operation of the occupant to which the authority is given.

3. The autonomous driving system (1) according to claim 1 or 2, wherein the control unit (14) acquires a voice of the occupant via the user interface (13), and determines a time range of data for extracting the input value and the instruction value of the machine learning model (120) based on a voice recognition result.

4. The autonomous driving system (1) according to any one of claims 1to 3, wherein the control unit (14) extracts data going back a predetermined time from a timing at which the user operation related to the information transmission is received via the user interface (13).
